# EUROPEAN PATENT APPLICATION

(11) **EP 3 276 602 A1**
(43) Date of publication of application: **31.01.2018**
(21) Application number: 16181445.4
(22) Date of filing: 27.07.2016
(51) Int. Cl.: G09G 3/3208, G09G 3/00

(54) **A METHOD AND SYSTEM FOR CALIBRATING A DISPLAY SCREEN**

(71) Applicant: Advanced Digital Broadcast S.A., 1292 Chambesy (CH)
(72) Inventor: Cichonski, Dariusz, 65-119 Zielona Gora (PL)
(74) Representative: Kancelaria Eupatent.pl Sp. z.o.o

(57) **Abstract**

A method for calibrating a display screen (111), the method comprising: displaying (602) an image pattern (102) of a uniform color on the display screen (111); capturing (603) an image of the display screen (111) with the image pattern (102) displayed thereon by an image capturing device (120, 140); analyzing (604, 605) the captured image (101) to determine a plurality of image areas (202, 203, 205, 206) of a color diverging from the image pattern (102); calculating (606) calibration data (103) for each of the plurality of areas of the display screen (111) to compensate the color distortions introduced to the image pattern (102) by the display screen (111) within that area (202, 203, 205, 206); providing (607-609) the calibration data to control the display screen (111).

## Description

### TECHNICAL FIELD

The present disclosure relates to calibrating display screens, in particular flat panel OLED displays, in order to provide uniform color distribution over the surface of the display.

### BACKGROUND

OLED (Organic Light Emitting Diode) panel displays become more and more popular, especially when unit prices decreases. They have many advantages over LCD (Liquid Crystal Display) panels, in particular with respect to brightness and contrast. However, OLED displays have also some disadvantages. One of them is a poor color stability that manifests as areas that have slightly different color than other areas. These differences can change in time. They are not a major problem when watching movies or photos, but become more visible when the OLED panel is used as a computer or a tablet screen where synthetic pictures are displayed. Differences in color over a plain surface can be easily visible.

Calibration is a known technique of adjusting the operation of a device to meet predetermined criteria. So far, calibration of brightness of display screens has been performed globally for the whole screen.

A US patent application US20030053044A1 discloses a system and method for measuring the average light levels from a flat panel display for use in a brightness compensating system. One or more photodiodes are disposed outside of the display area of a flat panel display so as to measure the average light levels directly or via total internal reflection through the transparent substrate of the display. The measured light levels are then used to provide a baseline for calibrating the color balance and brightness of the display using the brightness compensating system. Such system requires a dedicated hardware setup and therefore increases the cost of the display device, is not universal and not applicable for existing devices without the system embedded therein.

There is a need to provide a system and method for calibrating OLED panels in order to provide uniform color distribution over the surface of the display, which will be universal, applicable to a wide range of displays and will not require dedicated hardware to perform the calibration.

### SUMMARY

There is disclosed a method for calibrating a display screen, the method comprising: displaying an image pattern of a uniform color on the display screen; capturing an image of the display screen with the image pattern displayed thereon by an image capturing device; analyzing the captured image to determine a plurality of image areas of a color diverging from the image pattern; calculating calibration data for each of the plurality of areas of the display screen to compensate the color distortions introduced to the image pattern by the display screen within that area; providing the calibration data to control the display screen.

The method can be iterated for a plurality of image patterns.

The method may comprise analyzing the captured image by analyzing image histograms to determine areas of dominant color.

The image areas can be macro-blocks of pixels.

The image areas can be individual pixels.

There is also disclosed a system for calibrating a display screen, the system comprising the following modules: a source of an image pattern configured to provide an image pattern for display on the display screen; an image capturing device configured to capture an image of the display screen; an image data analysis module configured to provide calibration data to control the display screen; wherein the system modules are configured to perform the steps of the method as described above.

The image data analysis module can be separate from the image capturing device.

The image data analysis module can be accessible as a cloud service via the Internet.

The image data analysis module can be embedded in the image capturing device.

The image data analysis module can be a software application operated by a mobile image capturing device.

The display screen may comprise an embedded controller for receiving the calibration data and calibrating the display screen accordingly.

The system may comprise comprising a screen controller external to the display screen for receiving the calibration data and applying the calibration data to adjust the signal transmitted to the display screen.

### BRIEF DESCRIPTION OF FIGURES

The presented method and system are shown by means of example embodiments on a drawing, wherein:
Figs. 1A-1F, 2 and 3 show embodiments of a system for calibrating OLED displays.
Fig. 4 shows an example of a structure of an image data analysis module.
Fig. 5 shows an example of a structure of a mobile device.
Fig. 6 shows in general a method for calibrating an OLED display.
Figs. 7A-7B show details of one embodiment of a calibration procedure.
Fig. 8 shows details of another embodiment of a calibration procedure.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

In the present disclosure, the term "video content" is to be understood more broadly as multimedia content comprising video data and associated audio data and associated additional data (such as content description, etc.). The term "video content" is used to distinguish the content from other content types, such as still images or raw data (e.g. files).

### DETAILED DESCRIPTION

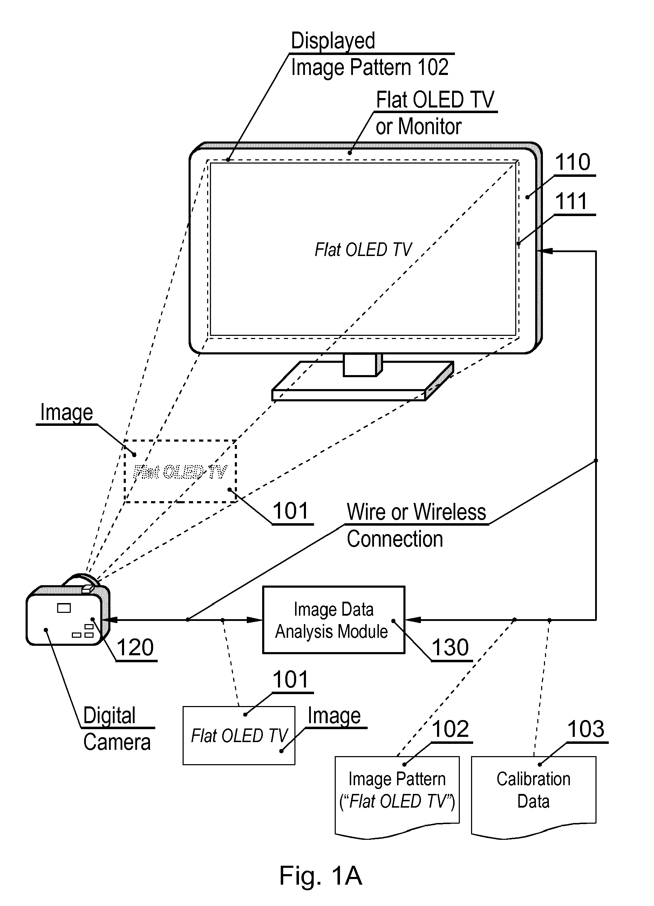

Figs. 1A-1 F show embodiments of the system for calibrating OLED displays.

In one embodiment, as shown in Fig. 1A, a flat OLED display 110, i.e. a TV screen or a computer monitor, is configured to display on its screen 111 an image pattern 102.

A digital camera 120 is used to capture an image 101 of the screen 111. The image can be captured by the user of the system upon receiving instructions, e.g. on how to setup the lighting (e.g. to capture the image in a daylight or in a dark), what shall be the distance from the display, which area of the display shall be captured by the camera etc. The instructions can be displayed or played (as a video) by the display 110 prior to displaying the image pattern 102.

The captured image 101 is transmitted (by wire or wirelessly) from the camera 120 to an image data analysis module 130. The image data analysis module 130 knows the image pattern 102 that has been displayed on the screen 111 while the image 101 was captured. In one embodiment, the image data analysis module 130 may generate the image pattern 102 and send it to the OLED display 110 for presentation on the screen 111. The image data analysis module 130 is configured to compare the captured image 101 with the image pattern 102, determine areas of the screen 111 that need to be calibrated and generate calibration data 103 that are sent (by wire or wirelessly) to the display 110 to calibrate it.

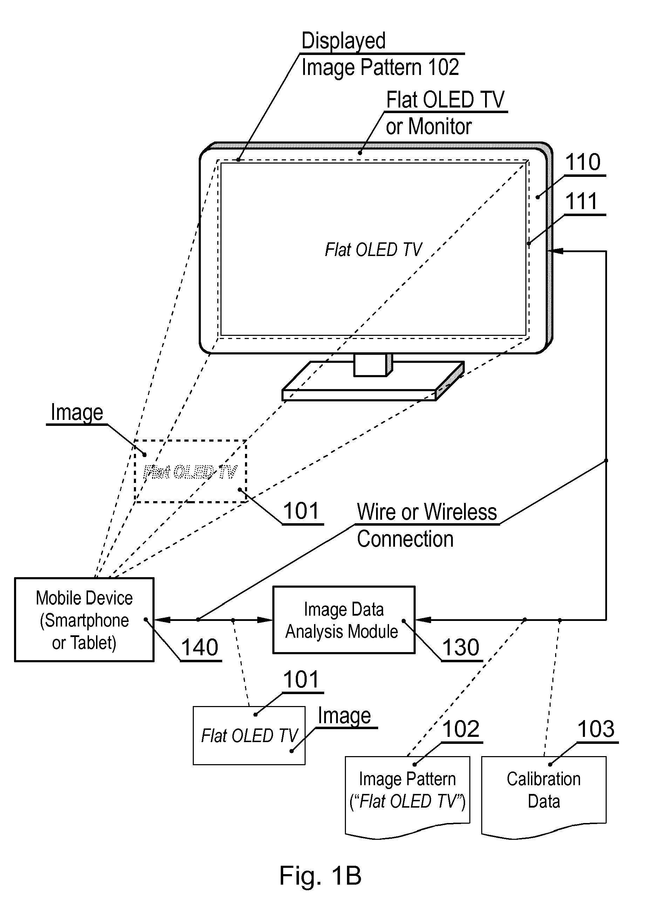

Fig. 1 B shows an embodiment similar to the one of Fig. 1A, wherein instead of a digital camera 120 device, a mobile device 140 is used, such as a tablet or a smartphone, with an embedded camera.

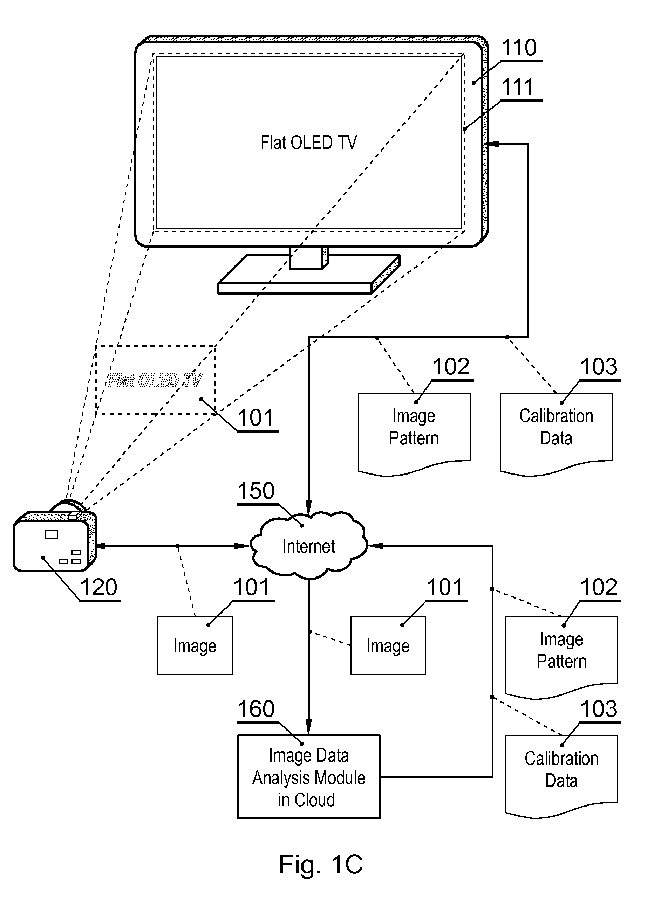

Fig. 1C shows an embodiment similar to the one of Fig. 1A, wherein the image data analysis module 160 is a module operating in a cloud. It can operate according to the SaaS (software as a service) model. The image data analysis module 160 is operated by an external server accessible via the Internet 150.

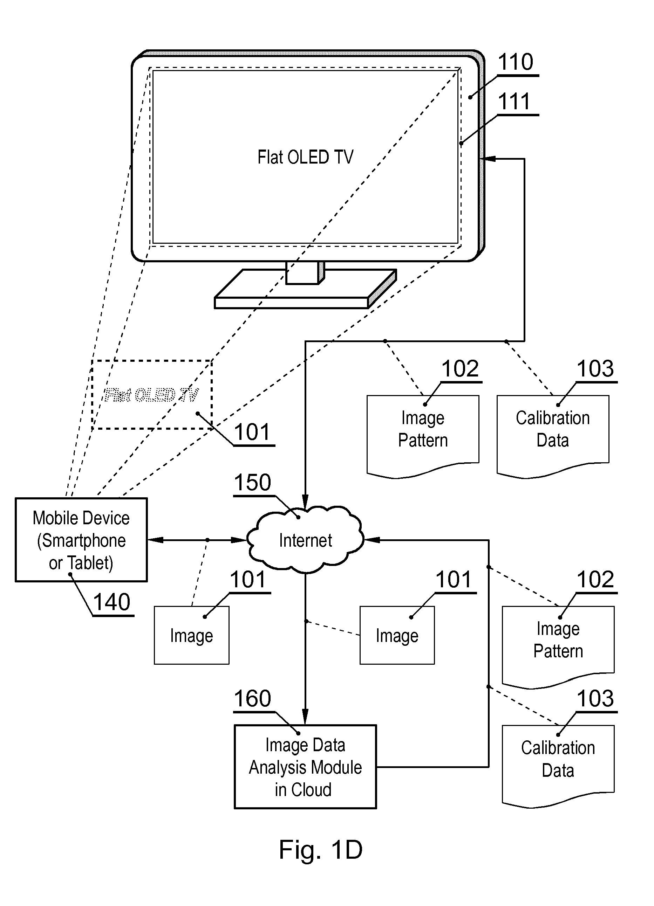

Fig. 1 D shows an embodiment similar to the one of Fig. 1C, wherein instead of a digital camera 120 device, a mobile device 140 is used, such as a tablet or a smartphone, with an embedded camera.

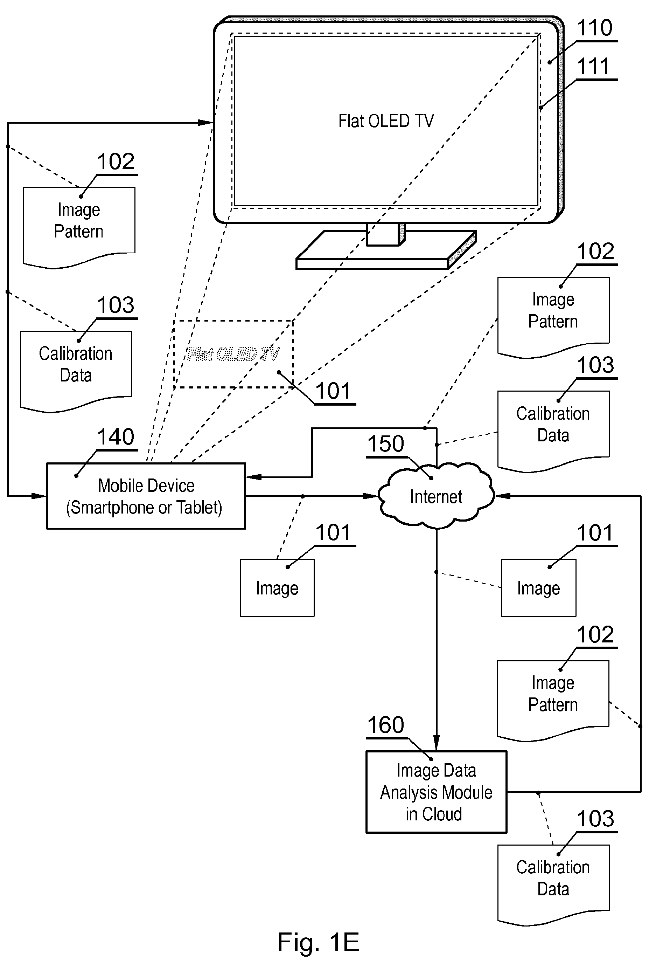

Fig. 1E shows an embodiment similar to the one of Fig. 1D, wherein the mobile device 140 is configured to communicate with the display 110 that is calibrated. The mobile device 140 receives the image pattern 102 from the image data analysis module 160, sends it to the display 110 to be calibrated, captures the image 101 of the screen 111, sends it to the image data analysis module 160, receives calibration data 103 generated by the image data analysis module 160 and sends the calibration data 103 to the display 110.

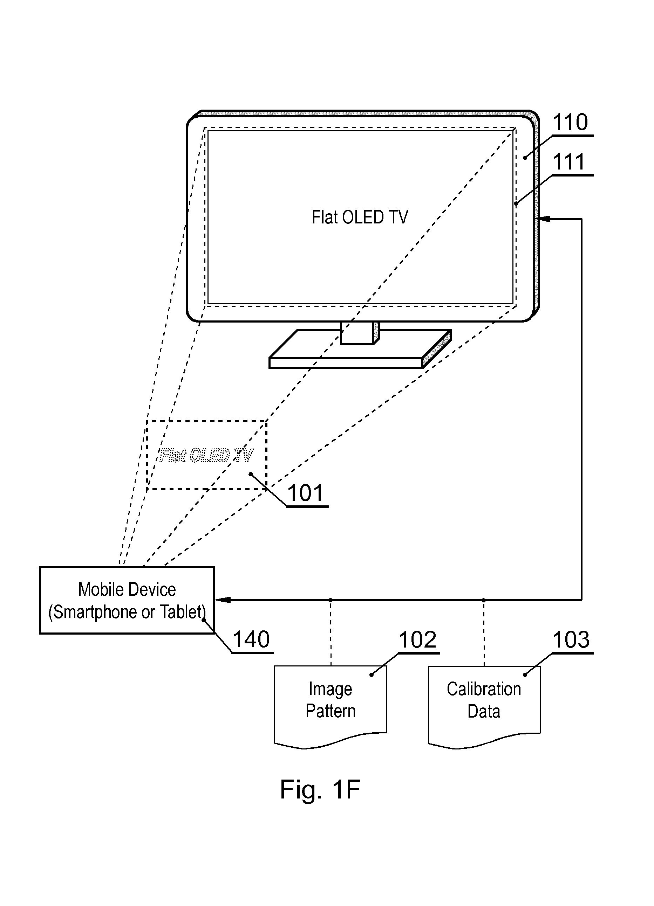

Fig. 1 F shows an embodiment, wherein the mobile device 140 is configured to communicate with the display 110 that is calibrated and to perform the image analysis, i.e. the image data analysis module is embedded in the mobile device. The mobile device 140 sends the image pattern 102 to the display 110 to be calibrated, captures the image 101 of the screen 111, analyzes the captured image 101 to generate calibration data 103 and sends the calibration data 103 to the display 110.

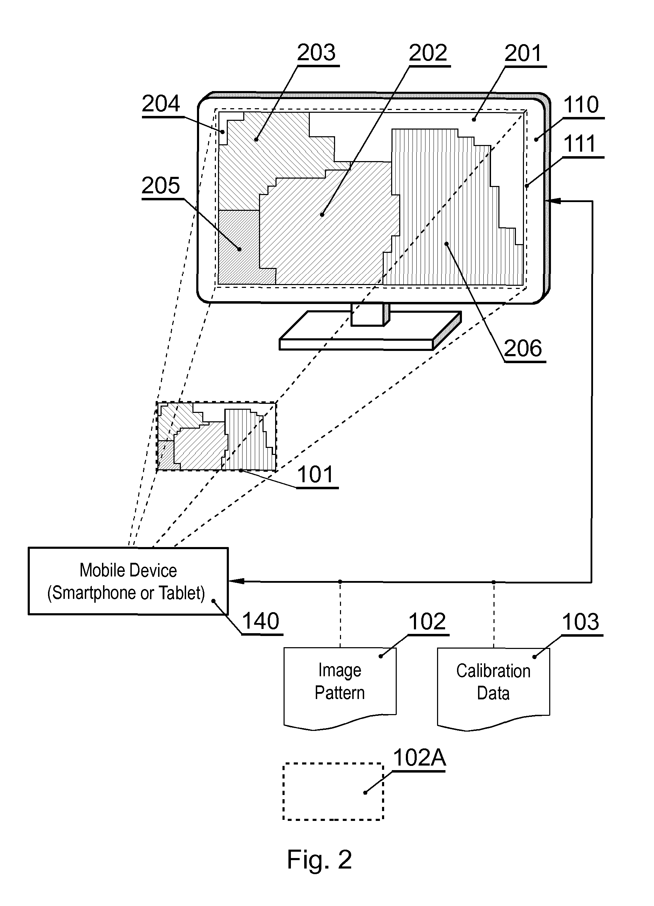

Fig. 2 shows an example of a system such as shown in Fig. 1 F (which is applicable to other embodiments as well), during use, wherein an image pattern 102A, preferably of a uniform color plane, is displayed on an uncalibrated screen 111. If the screen is discalibrated, areas 202, 203, 205, 206 of shades that diverge from the image pattern 102A may appear on screen (along with areas 201, 204 which display the correct color). The captured image 101 contains information about the areas 201-206 and can be used to calibrate the device by generating calibration data 203 that identifies the areas 202, 203, 205, 206 for which color has to be corrected so that, after calibration, the image displayed on screen 111 is closer to the image pattern 102A.

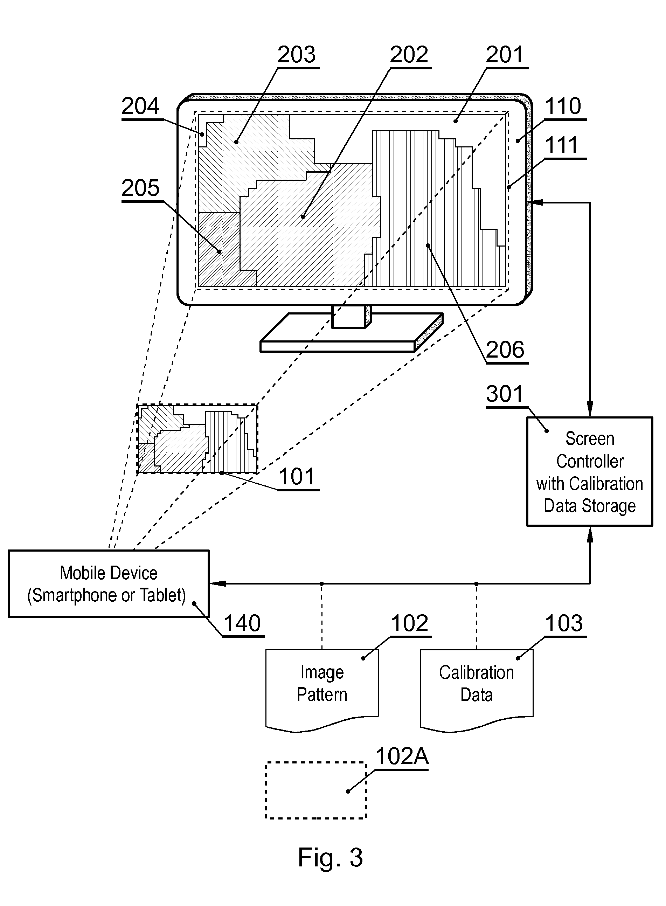

Fig. 3 shows an example of another system in use, wherein the OLED display 110 is driven by a screen controller 301 with calibration data storage. The screen controller 301 may be a dedicated device or may form part of a device that provides a signal to the OLED display, such as a personal computer, a video disc player, a game console, a television set-top box, a video interface etc. The image pattern 102A and the calibration data 103 are sent to the screen controller 301. The screen controller 301 is responsible for applying the calibration to the signal transmitted to the display 110 such as to compensate the color distortions introduced by the display.

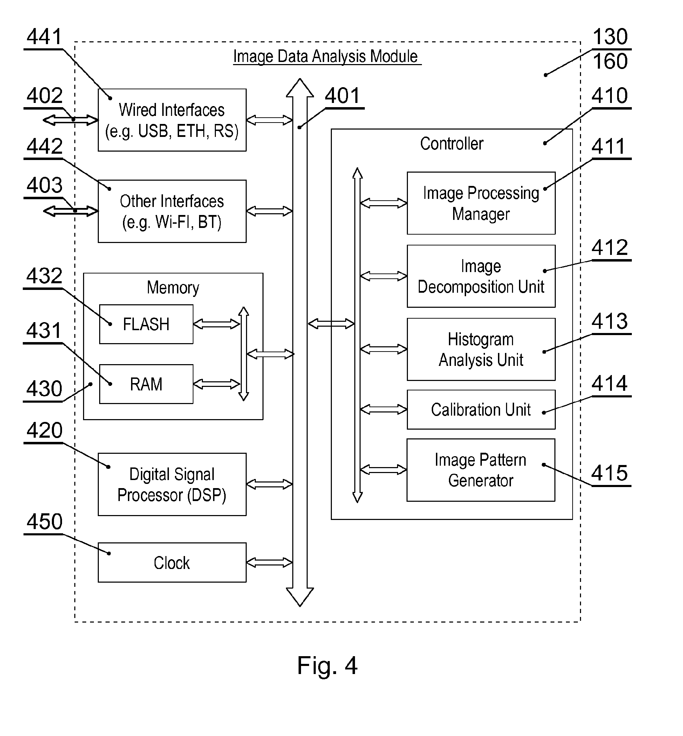

Fig. 4 shows an example of a structure of the image data analysis module 130, 160. The module comprises wired interfaces 402, such as USB, Ethernet, serial port (such as RS-232) and/or wireless interfaces 442, such as Wi-Fi or Bluetooth. The interfaces 402, 442 are used to communicate with external devices, such as the camera 120, the mobile device 140, the OLED display 110, the screen controller 301, directly or via a network such as the Internet 150.

The module operates utilizing memory blocks 430, including RAM 431 and Flash 432 memory blocks.

Data can be processed using a controller 410 or a digital signal processor 420.

A clock 450 is used to synchronize the timing of generating the image pattern and capturing of the image of screen, if such timing synchronization is necessary.

The module is controlled by a controller 410 comprising a plurality of units configured to provide the functionality of the method as described below. An image processing manager 411 is configured to manage image processing operations. An image decomposition unit is configured to decompose the image, as in steps 604, 705, 807 of the methods presented below. A histogram analysis unit is configured to analyze histograms of the captured image, as in steps 605, 706, 808. A calibration unit is configured to generate calibration data 103, as in steps 606, 713, 809. An image pattern generator is configured to generate image patterns 102, as in steps 601, 702, 803.

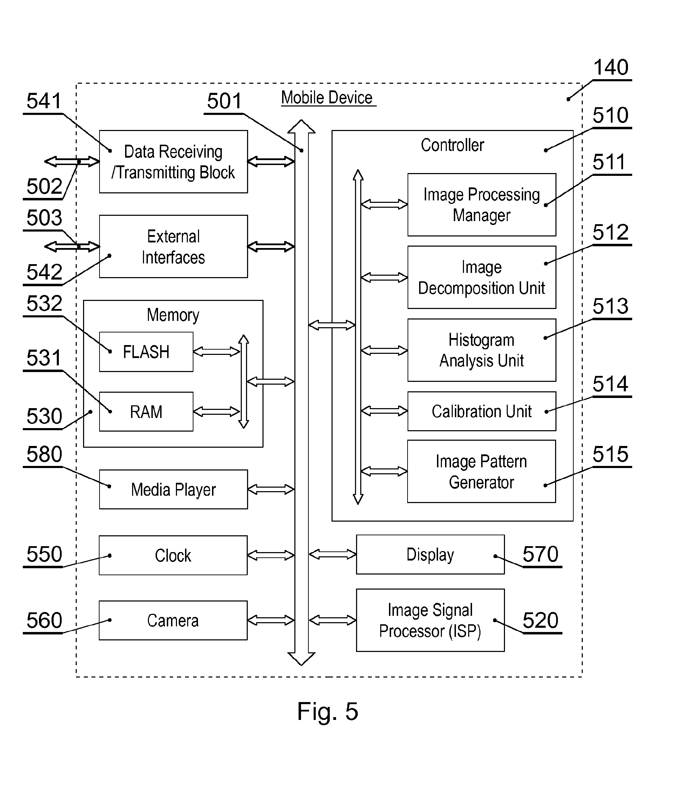

Fig. 5 shows an example of a structure of the mobile device 140 for capturing the screen image. The mobile device may comprise data transmitting/receiving blocks 541 and external interfaces 542 for communicating with other devices, such as the image data analysis module 130, 160, the display 110, the screen controller 301, directly or via a network such as the Internet 150.

The module operates utilizing memory blocks 530, including RAM 531 and Flash 532 memory blocks.

A clock 550 is used to generate a time stamp for the captured image, if necessary.

A camera 560 is used to capture the image of the screen.

A media player 580 can be used to display the captured image on the display 570.

Data can be processed using a controller 510 or an image signal processor 520.

The module is controlled by a controller 510 comprising a plurality of units configured to provide the functionality of the method as described below. Units 511-515 correspond to the units 411-415.

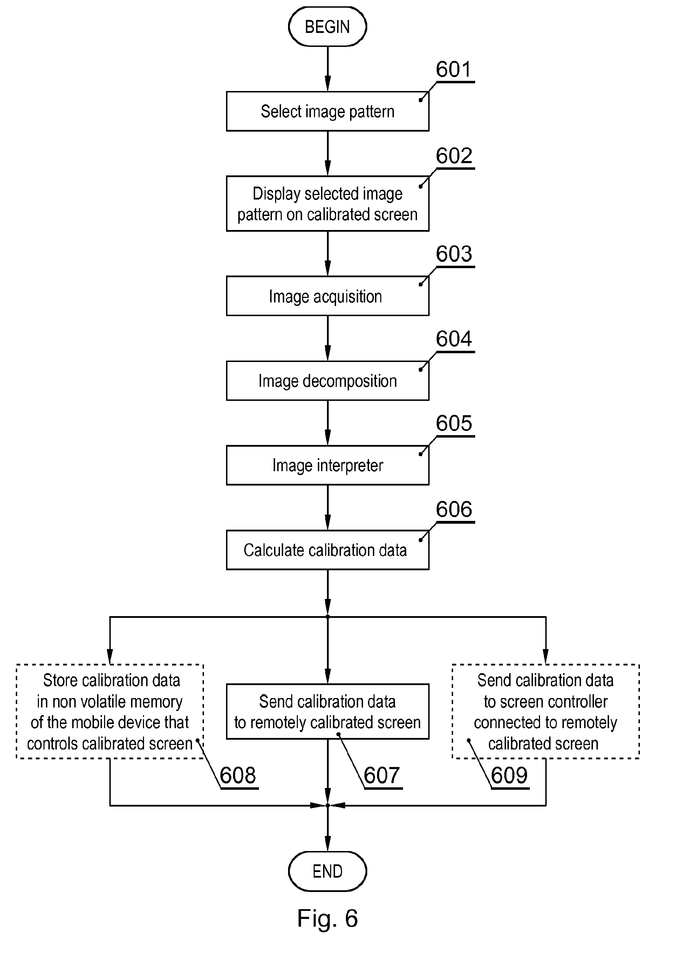

Fig. 6 shows in general a method for calibrating the OLED display. First, in step 601, an image pattern is selected. The image pattern is preferably a uniform color plane, such as white, red, green, blue or yellow plane. Next, the selected image pattern is displayed on screen 602. Image is captured in step 603 using a camera (stand-alone or embedded in a mobile device). Next, the captured image is processed in step 604 to identify the areas of shades that differ from the image pattern and decompose the captured image into these areas. The image is then interpreted in step 605 to determine the amount of correction that need to be applied to the areas 202, 203, 205, 206 diverging from the image pattern such as to improve the correspondence of the area with the image pattern. The calibration data is calculated in step 606 based on the determined amount of correction. Next, depending on the system configuration and modules and devices used, the calibration data is applied to calibrate the display. In one embodiment, such as shown in Figs. 1A-1D and 2, the calibration data is sent in step 607 directly to the remotely calibrated display 110. In other embodiments, such as shown in Figs. 1E-1 F, the calibration data can be stored in step 608 in the non volatile memory of the mobile device that controls the calibrated display 110. In other embodiments, such as shown in Fig. 3, the calibration data can be sent in step 609 to the screen controlled 301 connected to the calibrated display.

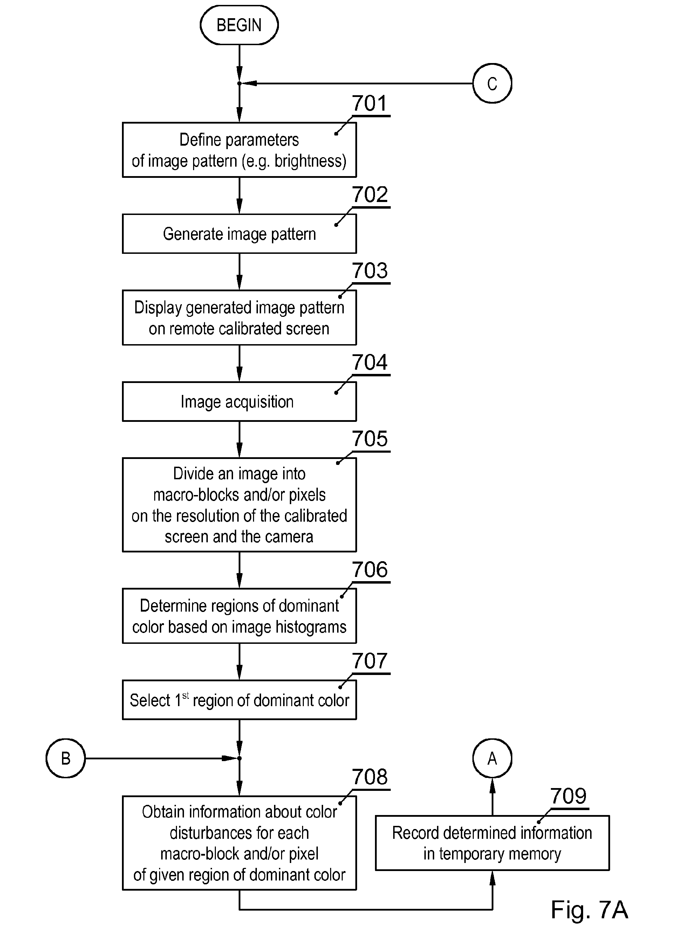

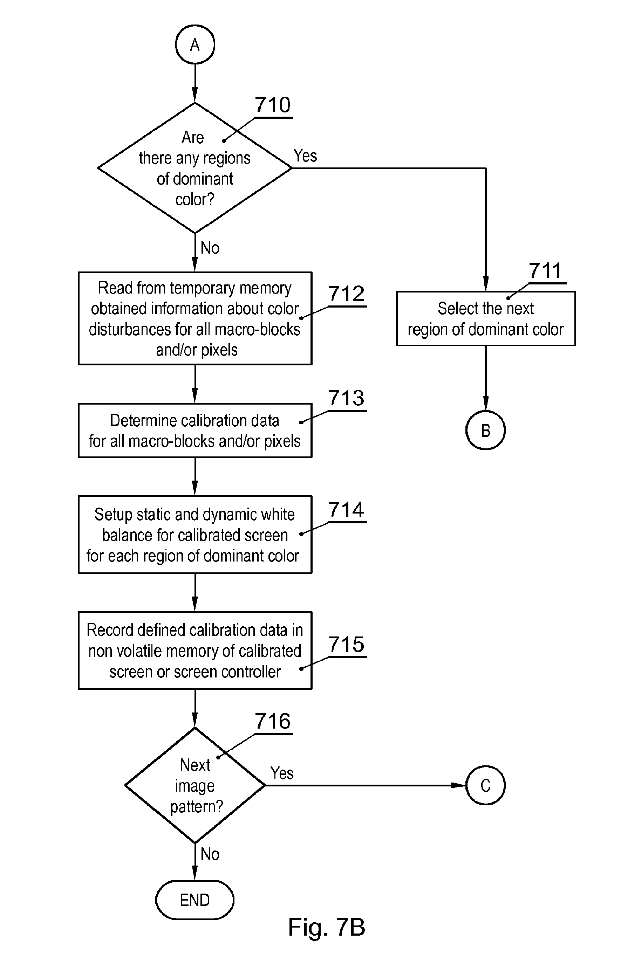

Figs. 7A-7B show details of one embodiment of the calibration procedure. First, in step 701, the parameters of the image pattern are determined, for example the brightness. Next, in step 702, the image pattern 102 is generated and displayed on the remote calibrated display screen in step 703. Next, the image 101 is captured by the camera in step 704. The image is then divided into macro-blocks and/or pixels, according to the resolution of the calibrated screen and the camera 705. This step may include cropping the captured image such as to disregard the areas that are outside the screen 111 (if a user has captured an image larger than the screen which contains the surrounding of the screen as well) and/or to rotate the image (if the axes of the image do not correspond to the axes of the screen). Next, regions of dominant color are determined, based on image histograms in step 706. The regions are then analyzed consecutively. A first region of a dominant color is selected in step 707 and information about color disturbances for each macro-block and/or pixel of that region is obtained in step 709. That information is recorded in the temporary memory in step 709. The procedure then proceeds to other regions in steps 710, 711, until all regions are analyzed. Next, in step 712 the obtained information about color disturbances for all macro-blocks and/or pixels is read from the temporary memory and calibration data is determined in step 713 for these macro-blocks and/or pixels. For each region of dominant color, static white balance (i.e. balance for low intensities) and dynamic white balance (i.e. balance for high intensities) is setup. For example, if the displayed image is darker than the image pattern in one block, that block is calibrated to display a brighter image. In contrast, if the displayed image is brighter than the image pattern in one block, that block is calibrated to display a darker image. Next, in step 715 the calibration data is recorded in the non volatile memory of the calibrated display screen 110 or screen controller 301. The procedure may then proceed to generating a next image pattern in step 716, which can be the same as the previous pattern (to check whether the calibration was successful for that image pattern and the image quality is improved) or another pattern (to calibrate the display for other conditions). For example, the following patterns may be consecutively applied:
- white, white
- white, red, green, blue
- white, white, red, red, green, green, blue, blue
- white, red, green, blue, white, red, green, blue
- low brightness white, high brightness white
- medium brightness white, low brightness white, high brightness white

In a particular embodiment, a camera having a higher resolution than the resolution of the display screen is to be used, such that a plurality of pixels of the image captured by the camera are approximated to a single pixel of the display screen.

Preferably, the calibrated display is a flat display panel. In more elaborate embodiments, the method and system can be configured to calibrate curved display panels as well, for example by processing the captured image such as to take into account the differences in distance from the camera eye to the region of the display. Alternatively, a plurality of images of the display with the image pattern may be captured, for example an image of the left portion of the display taken from the right, an image of the central portion of the display taken in front of the display and an image of the right portion of the display taken from the left. Furthermore, a panoramic image can be captured by moving the camera window across the length of the display, from one side to the other.

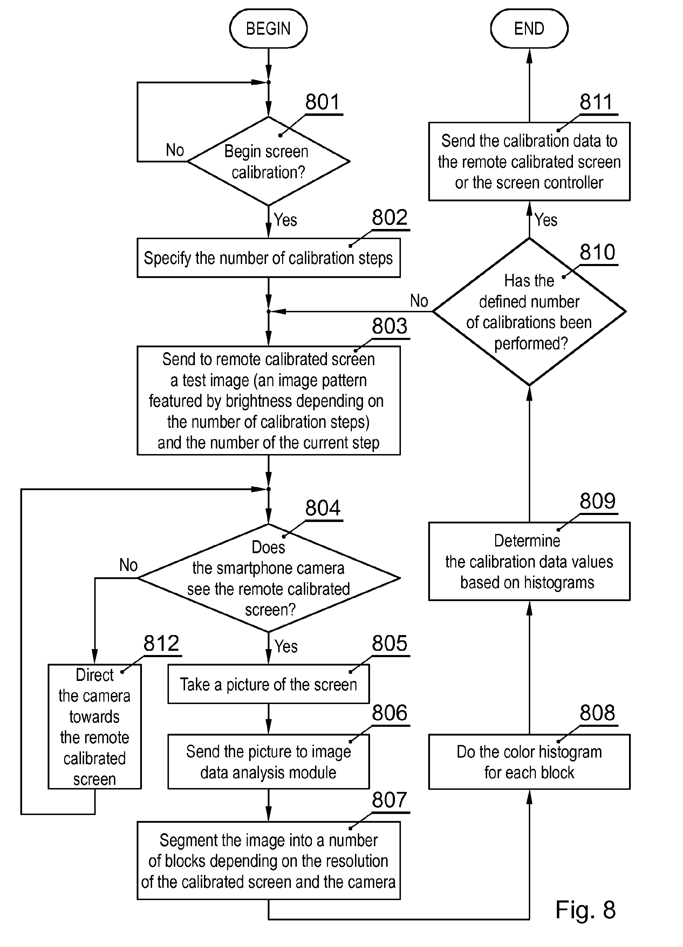

Fig. 8 shows details of another embodiment of the calibration procedure. After the calibration process is invoked in step 801 (e.g. by the user launching a calibration application, or automatically by the system in a periodic manner for example once a month or once a quarter), the number of calibration steps are specified in step 802 (for example, by the user selecting a desired level of calibration, such as rough calibration (e.g. 1 step) or detailed calibration (e.g. 6 steps)). Next, in step 803 a test image pattern 102 is sent to the calibrated display screen. For example, if a plurality of calibration steps are to be performed, and the system is setup to generate image patterns of a white screen only, the consecutive image patterns may differ by the level of brightness. In step 804 an application run at the mobile device, such as a smartphone, may analyze whether the image of the display 110 that is seen by the camera of that device corresponds with predetermined requirements (e.g. such that the display 110 occupies 90% of the field of view of the camera and the edges of the display are substantially parallel to the camera axes) - if not, the user is ordered to redirect the camera in step 812. Once the camera is correctly aligned, the picture of the screen is captured in step 805. The captured image 101 is sent to the image data analysis module in step 806, wherein it is segmented into a number of blocks depending on the resolution of the calibrated screen and the camera in step 807. Next, a color histogram is calculated for each block in step 808. The calibration data values are next determined based on the histograms in step 809. The calibration is repeated for the required number of iterations in step 810. Next, the calculated calibration data is sent to the remote calibrated display screen or to the screen controller in step 811.

Preferably, the step of image acquisition 603, 704, 805 may include image correction to compensate for image distortions introduced by the lens of the camera, which is particularly useful for mobile devices with lower-quality camera lens. The image correction may be particularly aimed to compensate for distortions of brightness levels, such as vignetting.

It can be easily recognized, by one skilled in the art, that the aforementioned method for calibration of a display screen may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for calibrating a display screen (111), the method comprising:
- displaying (602) an image pattern (102) of a uniform color on the display screen (111);
- capturing (603) an image of the display screen (111) with the image pattern (102) displayed thereon by an image capturing device (120, 140);
- analyzing (604, 605) the captured image (101) to determine a plurality of image areas (202, 203, 205, 206) of a color diverging from the image pattern (102);
- calculating (606) calibration data (103) for each of the plurality of areas of the display screen (111) to compensate the color distortions introduced to the image pattern (102) by the display screen (111) within that area (202, 203, 205, 206);
- providing (607-609) the calibration data to control the display screen (111).

2. The method according to claim 1, wherein the method is iterated for a plurality of image patterns (102).

3. The method according to any of previous claims, comprising analyzing (604, 605) the captured image (101) by analyzing image histograms to determine areas of dominant color.

4. The method according to any of previous claims, wherein the image areas are macro-blocks of pixels.

5. The method according to any of previous claims, wherein the image areas are individual pixels.

6. A system for calibrating a display screen (111), the system comprising the following modules:
- a source of an image pattern configured to provide an image pattern (102) for display on the display screen (111);
- an image capturing device configured to capture an image (101) of the display screen (111);
- an image data analysis module configured to provide calibration data (103) to control the display screen (111);
- wherein the system modules are configured to perform the steps of the method of any of claims 1-5.

7. The system according to claim 6, wherein the image data analysis module (130) is separate from the image capturing device (120, 140).

8. The system according to claim 6, wherein the image data analysis module (160) is accessible as a cloud service via the Internet (150).

9. The system according to claim 6, wherein the image data analysis module is embedded in the image capturing device (140).

10. The system according to claim 9, wherein the image data analysis module is a software application operated by a mobile image capturing device (140).

11. The system according to any of claims 6-10, wherein the display screen (111) comprises an embedded controller for receiving the calibration data (103) and calibrating the display screen (111) accordingly.

12. The system according to any of claims 6-10, comprising a screen controller (301) external to the display screen (111) for receiving the calibration data (103) and applying the calibration data (103) to adjust the signal transmitted to the display screen (111).
